# EUROPEAN PATENT SPECIFICATION

(11) **EP 1 765 732 B1**
(45) Date of publication and mention of the grant of the patent: **03.09.2014**
(21) Application number: 05756909.7
(22) Date of filing: 10.06.2005
(51) Int. Cl.: C01C 1/04, C01B 3/02, C01B 3/56

(54) **PROCESS FOR PRODUCING AMMONIA ON THE BASIS OF NITROGEN AND HYDROGEN OBTAINED FROM NATURAL GAS**
VERFAHREN ZUR HERSTELLUNG VON AMMONIAK AUF DER BASIS VON STICKSTOFF UND WASSERSTOFF AUS ERDGAS
PROCEDE DE PRODUCTION D'AMMONIAC DE L'AZOTE ET DE HYDROGENE A PARTIR DE GAZ NATUREL

(30) Priority: 18.06.2004 EP 04014345
(43) Date of publication of application: 28.03.2007
(73) Proprietor: Ammonia Casale S.A., 6900 Lugano-Besso (CH)
(72) Inventor: FILIPPI, Ermanno, CH-6976 Castagnola (CH)
(74) Representative: Zardi, Marco
(86) International application number: PCT/EP2005/006255
(87) International publication number: WO 2005/123588

(56) References cited:
- DE-A- 10 116 152
- GB-A- 811 749
- US-A- 4 725 380
- US-A- 6 086 840
- US-A1- 2002 098 132

## Description

### Field of application

The present invention, in its most general aspect, refers to process for producing ammonia on the basis of nitrogen and hydrogen.

In particular, the invention refers to a process for producing ammonia on the basis of a mixture essentially comprising nitrogen and hydrogen obtained from natural gas, where said natural gas is subjected to a partial oxidation reaction with an oxygen-rich gas in presence of steam obtaining a crude synthesis gas comprising hydrogen and carbon monoxide, said crude synthesis gas being treated in at least one catalytic reaction step (shift) to convert part of the carbon monoxide into carbon dioxide obtaining a converted synthesis gas comprising hydrogen, carbon dioxide and carbon monoxide, said converted synthesis gas being subjected to at least one decarbonation step to at least partially remove the carbon dioxide and to at least one purification step to at least partially remove the carbon monoxide.

### Prior art

As known, for large-scale production of ammonia (in other words for producing, for example, 3000 t per day) from natural gas, there is an ever-increasing requirement to realize a high-yield process, which is easy to carry out and does not require high energy consumption and operating costs.

In order to satisfy the aforementioned requirement, processes are generally used according to which the following succession of operations is provided:
- partial oxidation reaction of the natural gas, obtaining a crude synthesis gas;
- shift reaction, obtaining a converted synthesis gas;
- decarbonation operation to remove the carbon dioxide present in said converted synthesis gas, carried out by a physical solvent suitable for absorbing the carbon dioxide;
- purification operation to remove the carbon monoxide present in said converted synthesis gas, carried out through liquid nitrogen wash;
- ammonia synthesis from the mixture essentially comprising hydrogen and nitrogen that is obtained after the aforementioned operations.

The decarbonation and purification operations are therefore respectively intended to remove carbon dioxide and carbon monoxide, up to a concentration of a few parts per million by volume (for example, a value aimed for is a value lower than 10 p.p.m.v. of carbon monoxide).

Although advantageous from various points of view, the processes for producing ammonia schematically described above do, nevertheless, have recognized drawbacks.

Amongst the drawbacks, one only has to recall the fact that the liquid nitrogen wash operation must take place at very low temperature and consequently requires the use of special materials and suitable heat insulation, which, although known, are nevertheless quite expensive and require all a succession of special care. Processes for making hydrogen are for instance disclosed in US-A-4 725 380 and US 2002/0098132A1.

### Summary of the invention

The technical problem underlying the present invention is that of devising and providing a process for producing ammonia on the basis of a mixture essentially comprising nitrogen and hydrogen obtained from natural gas, capable of satisfying the requirement outlined above, at the same time overcoming the quoted limitations and/or drawbacks with reference to the prior art in a simple and effective way.

This problem is solved, according to the present invention, by a process for producing ammonia on the basis of a mixture essentially comprising nitrogen and hydrogen obtained from natural gas, of the aforementioned type and characterized in that for said at least one purification step at least one molecular sieve is used.

Further characteristics and advantages of the process for producing ammonia according to the present invention shall become clearer from the description, made hereafter, of a preferred example embodiment thereof, given for indicating and not limiting purposes, with reference to the attached drawings.

### Brief description of the drawing

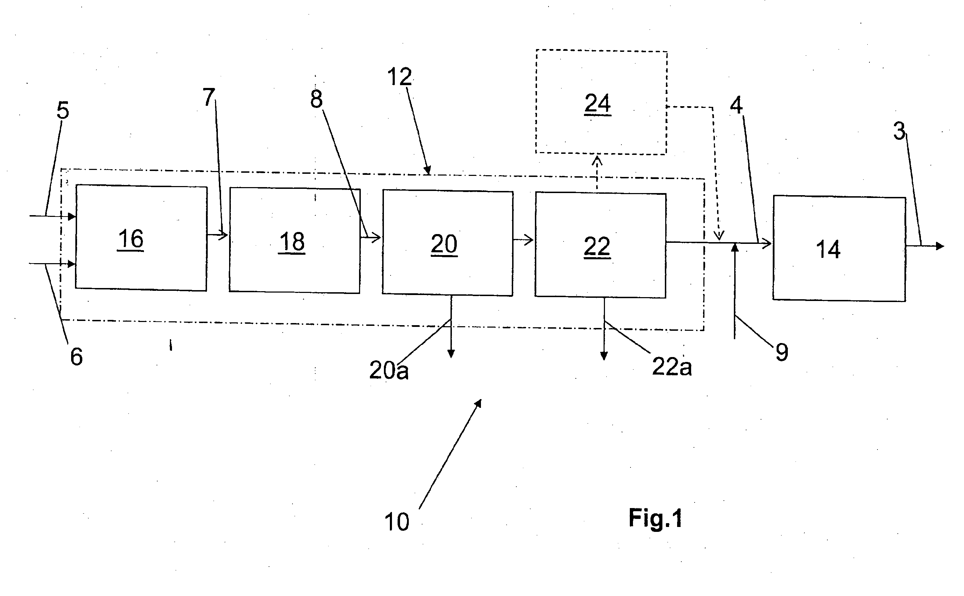

Figure 1 represents a block diagram of a plant that carries out the process for producing ammonia according to the invention.

### Detailed description of a preferred embodiment of the invention

With reference to figure 1, an ammonia production plant is schematically shown that carries out the process according to the invention and that is totally indicated with 10. Ammonia 3 is produced on the basis of a mixture 4 essentially comprising nitrogen and hydrogen, in turn obtained from natural gas 5.

The plant 10 comprises a first portion 12 for producing said mixture essentially comprising nitrogen and hydrogen and and a second portion 14 for the synthesis of said ammonia 3.

The first portion 12 of the plant 10 comprises a partial oxidation section 16, a section 18 for the catalytic reaction of carbon monoxide into carbon dioxide comprising at least one so-called shift converter, a decarbonation section 20 and a purification section 22.

In particular, such a purification section 22 comprises at least one molecular sieve apparatus.

By the term "molecular sieve" we mean to include all those conventional materials having micropores capable of preferentially adsorbing a predetermined gas contained in a gaseous mixture, including activated carbon. According to the adsorption and release procedure of said predetermined gas, these materials are classified as molecular sieve or activated carbon of the PSA (pressure swing adsorption) and of the TSA (temperature swing adsorption) type.

In the PSA adsorption procedure, the gaseous mixture containing said predetermined gas is made to pass under pressure through the molecular sieve, in such a way to produce the preferential adsorption of the predetermined gas in the micropores. Then, the pressure is reduced so as to obtain a desorption of the predetermined gas together consequently regenerate the molecular sieve.

Differently, in the TSA method, the preferential adsorption of the predetermined gas in the micropores is carried out by making the gaseous mixture, containing the predetermined gas to be separated, pass through the aforementioned molecular sieve at a determined temperature, for example at a temperature not greater than 80°C. Then the temperature is increased, for example with a flow of steam, so as to obtain a desorption of the predetermined gas together with other gaseous components possibly retained and consequently regenerate the molecular sieve.

Preferably, according to the present invention, a PSA-type molecular sieve is used.

In a further embodiment of the invention, the purification section 22 can be associated with a methanation section 24 comprising at least one so-called methanator.

The operation of the ammonia production plant 10 is specified hereafter.

The natural gas 5, suitably mixed with steam, is subjected, in the partial oxidation section 16 of the first portion 12 of the plant 10, to a partial oxidation reaction with an oxygen-rich gas 6 obtaining a crude synthesis gas 7 comprising hydrogen and carbon monoxide. As an example, when the partial oxidation section 16 comprises an autothermal reformer, it is advantageous to operate at a temperature of between 900 and 1300°C, preferably between 900 and 1200°C, and at a pressure of between 40 and 150 bar, preferably between 40 and 100 bar; said oxygen-rich gas 6 has at least 50%, preferably at least 70%, even more preferably at least 90% of oxygen. For example, oxygen-enriched air can be used.

In the shift converter (which carries out a conversion catalytic reaction step), the crude synthesis gas 7 is treated to convert part of the carbon monoxide into carbon dioxide obtaining a converted synthesis gas 8 comprising hydrogen, carbon dioxide and carbon monoxide.

The converted synthesis gas 8 is subjected to at least one decarbonation step, in the section 20, to at least partially remove the carbon dioxide 20a and to at least one purification step, in the apparatus 22, to remove the carbon monoxide 22a up to concentrations compatible with the ammonia synthesis catalyst present in the second portion 14 of the- plant 10, for example up to concentrations of less than 10 p.p.m.v..

In the purification apparatus 22 at least one molecular sieve for carbon monoxide is advantageously provided.

In the further embodiment of the invention, the methanation section 24 associated with the purification section 22 is used to carry out a methanation reaction and consequently to reduce the size of the purification section 22 itself, transforming the carbon monoxide into methane.

After said purification step, a feeding of nitrogen 9 is provided to form said mixture 4, essentially comprising nitrogen and hydrogen according to an optimal stoichiometric ratio for the ammonia synthesis catalyst, said mixture 4 indeed being treated in the second portion 14 of the plant 10, i.e. that for the synthesis of said ammonia 3.

We would like to point out that, for large-scale productions, the partial oxidation section 16 is preferably of the catalytic type, i.e. it comprises autothermal reformers, even if it is not excluded to use non-catalytic partial oxidation apparatuses, which require, on the one hand, higher oxygen consumption and therefore higher energy consumption, but which are constructively simpler. Particularly where the energy cost is low, it may therefore be advantageous to use non-catalytic apparatuses.

From the previous description it can clearly be seen that the process for producing ammonia according to the invention solves the technical problem and offers numerous advantages the first of which is the fact that it avoids the use of all those special materials necessary for the correct treatment of the liquid nitrogen used in the prior art.

Another major advantage of the invention is that the gas obtained at the end of the purification step is practically pure hydrogen that, in parallel with the ammonia synthesis, can be used for other productions.

## Claims

1. Process for producing ammonia (3) on the basis of a mixture (4) essentially comprising nitrogen and hydrogen obtained from natural gas (5), where said natural gas (5) is subjected to a partial oxidation reaction with an oxygen-rich gas (6) in presence of steam obtaining a crude synthesis gas (7) comprising hydrogen and carbon monoxide, said crude synthesis gas (7) being treated in at least one catalytic reaction step to convert part of the carbon monoxide into carbon dioxide obtaining a converted synthesis gas (8) comprising hydrogen, carbon dioxide and carbon monoxide, said converted synthesis gas (8) being subjected to at least one decarbonation step to at least partially remove the carbon dioxide (20a) and to at least one purification step to at least partially remove the carbon monoxide (22a), wherein for said at least one purification step at least one molecular sieve is used, **characterized in that** said oxygen-rich gas has at least 50% of oxygen.

2. Process according to clam 1, **characterized in that**, after said at least one purification step, a feeding of nitrogen (9) is provided to form said mixture (4) essentially comprising nitrogen and hydrogen that is treated in a synthesis plant (14) of said ammonia (3).

3. Process according to claim 1, **characterized in that** said at least one molecular sieve is of the PSA type.

4. Process according to claim 1, **characterized in that** said at least one purification step is associated with a methanation section (24).

5. Process according to claim 1, **characterized in that** said partial oxidation reaction is of catalytic type.

## Patentansprüche

1. Verfahren zum Herstellen von Ammoniak (3) auf der Grundlage eines Gemischs (4), das im Wesentlichen Stickstoff und Wasserstoff umfasst, die aus Erdgas (5) erhalten werden, wobei das Erdgas (5) einer teilweisen Oxidationsreaktion mit einem sauerstoffreichen Gas (6) in Gegenwart von Dampf unterworfen wird, so dass ein Rohsynthesegas (7) erhalten wird, das Wasserstoff und Kohlenmonoxid umfasst, wobei das Rohsynthesegas (7) in mindestens einem katalytischen Reaktionsschritt behandelt wird, um einen Teil des Kohlenmonoxids zu Kohlendioxid umzuwandeln, so dass ein umgewandeltes Synthesegas (8) erhalten wird, das Wasserstoff, Kohlendioxid und Kohlenmonoxid umfasst, wobei das umgewandelte Synthesegas (8) mindestens einem Dekarbonisierungsschritt zum zumindest teilweisen Entfernen des Kohlendioxids (20a) und mindestens einem Reinigungsschritt zum zumindest teilweisen Entfernen des Kohlenmonoxids (22a) unterworfen wird, wobei für den mindestens einen Reinigungsschritt mindestens ein Molekularsieb verwendet wird, **dadurch gekennzeichnet, dass** das sauerstoffreiche Gas mindestens 50 % Sauerstoff aufweist.

2. Verfahren nach Anspruch 1, **dadurch gekennzeichnet, dass** nach dem mindestens einen Reinigungsschritt das Zuführen von Stickstoff (9) vorgesehen ist, um das Gemisch (4) vorzusehen, das im Wesentlichen Stickstoff und Wasserstoff umfasst, welches in einer Syntheseanlage (14) des Ammoniak (3) behandelt wird.

3. Verfahren nach Anspruch 1, **dadurch gekennzeichnet, dass** das mindestens eine Molekularsieb vom PSA-Typ ist.

4. Verfahren nach Anspruch 1, **dadurch gekennzeichnet, dass** der mindestens eine Reinigungsschritt mit einem Methanierungsabschnitt (24) verbunden ist.

5. Verfahren nach Anspruch 1, **dadurch gekennzeichnet, dass** die teilweise Oxidationsreaktion vom katalytischen Typ ist.

## Revendications

1. Procédé de production d'ammoniac (3) sur la base d'un mélange (4) comprenant principalement de l'azote et de l'hydrogène, issus de gaz naturel (5), dans lequel ledit gaz naturel (5) est soumis à une réaction d'oxydation partielle avec un gaz riche en oxygène (6) en présence de vapeur de façon à obtenir un gaz de synthèse brut (7) comprenant de l'hydrogène et du monoxyde de carbone, ledit gaz de synthèse brut (7) étant traité dans au moins une étape de réaction catalytique afin de convertir une partie du monoxyde de carbone en dioxyde de carbone de façon à obtenir un gaz de synthèse converti (8) comprenant de l'hydrogène, du dioxyde de carbone et du monoxyde de carbone, ledit gaz de synthèse converti (8) étant soumis à au moins une étape de décarbonisation afin de supprimer au moins partiellement le dioxyde de carbone (20a) et à au moins une étape de purification afin de supprimer au moins partiellement le monoxyde de carbone (22a), dans lequel pour ladite au moins une étape de purification, au moins un tamis moléculaire est utilisé, **caractérisé en ce que** ledit gaz riche en oxygène contient au moins 50 % d'oxygène.

2. Procédé selon la revendication 1, **caractérisé en ce que**, après ladite au moins une étape de purification, de l'azote (9) est fourni afin de former ledit mélange (4) comprenant principalement de l'azote et de l'hydrogène qui est traité dans une installation de synthèse (14) dudit ammoniac (3).

3. Procédé selon la revendication 1, **caractérisé en ce que** ledit au moins un tamis moléculaire est de type PSA.

4. Procédé selon la revendication 1, **caractérisé en ce que** ladite au moins une étape de purification est associée à une section de méthanation (24).

5. Procédé selon la revendication 1, caractérisé en ce ladite réaction d'oxydation partielle est de type catalytique.
